# EUROPEAN PATENT SPECIFICATION

(11) **EP 1 767 684 B1**
(45) Date of publication and mention of the grant of the patent: **24.04.2013**
(21) Application number: 05020977.4
(22) Date of filing: 27.09.2005
(51) Int. Cl.: B29C 45/16, D06F 37/26, F16C 19/56, F16C 35/067

(54) **A front loading washing machine comprising a support for a rolling contact bearing holder**
Eine frontbeschickbare Waschmaschine umfassend einen Träger für einen Rollenlageraufnehmer
Lave-linge à chargement frontal comprenant un support pour un logement du palier à rouleaux

(43) Date of publication of application: 28.03.2007
(73) Proprietor: Aktiebolaget SKF, 415 50 Göteborg (SE)
(72) Inventor: Caprioli, Francesco, 10100 Torino (IT); Gallucci, Francesco, 10042 Nichelino (Torino) (IT); Mola, Roberto, 10138 Torino (IT)
(74) Representative: Tedeschini, Luca

(56) References cited:
- EP-A- 1 108 905
- EP-A- 1 296 077
- EP-A2- 0 219 115
- DE-A1- 10 216 517
- DE-C1- 10 040 319
- DE-U- 7 320 627
- JP-A- 2004 121 320
- US-A- 4 423 540
- US-A- 4 969 754
- PATENT ABSTRACTS OF JAPAN vol. 018, no. 006 (M-1537), 7 January 1994 (1994-01-07) -& JP 05 248514 A (NIPPON ISUEEDE KK), 24 September 1993 (1993-09-24)

## Description

The present invention refers to a support for a rolling contact bearing holder comprised in a front loading washing machine.

In general, as is illustrated in the Figure called "Prior Art", supports for rolling contact bearing holders for a washing machine 5 of a well known kind present a longitudinal axis A, and are interposed between a washtub 6 and a drive shaft 11 of the drum 7 in order to permit the rotation of the drive shaft 11 and the drum 7 themselves in relation to the washtub 6. In the more particular case of front loading washing machines, or rather in the case that the drum 7 is supported in overhanging fashion, the supports for rolling contact bearing holders must entirely support the weight of the drum 7 and the dynamic stress to which it is subjected, and comprise a substantially cylindrical tube 14 which extends along the axis A and which is inserted inside a cylindrical sleeve 15 of the washtub 6, two rolling contact bearings 12 and 13 which are mounted inside respective annular housings 12a and 13a which are obtained in the tube 14 and which are arranged along the axis A, and a cylindrical spacer 16 which is interposed between the two bearings 12 and 13 in order to maintain the two bearings 12 and 13 themselves at a determined axial distance from each other.

US 4 423 540 A discloses a support for a rolling contact bearing holder, the support being suitable for being engaged in a drive shaft of a drum of a washing machine. The support comprises a plastic tube which extends along its own longitudinal axis and provides two inner annular housings, two rolling contact bearings which are housed in the two annular housings, and a spacer which is interposed between the two rolling contact bearings in order to maintain the two bearings at a determined axial distance from each other. Other supports for rolling bearing holders are known from DE 100 40 319 C1, EP 1 296 077 A, DE 73 20 627 U and DE 102 16 517 A1.

The European patent No. 0 043 429 discloses a support for a rolling contact bearing holder, which is defined by a metal tube, and which is provided with two annular housings and an axial spacer, which is obtained by direct working of the metal tube itself together with the two housings.

In particular, each annular housing is produced separately from the other by means of working which involves the removal of metal shavings starting from the solid part of the metal tube in such a way as to also produce, as a consequence, the spacer, and the bearings are subsequently forced inside the relative housings once the metal tube has been housed in its final position inside the washing machine.

It is immediately obvious that the construction and production of a support for rolling contact bearings of this kind and of the relative washing machine is both complicated and very expensive.

The European patent No. 0 219 115 also discloses a support for a rolling contact bearing holder, which, as is illustrated in the Figure called "Prior Art", is also produced in such a way as to avoid the disadvantages relating to the support which is described in European patent Nr. EP 0 043 429, and which is defined by a plastic tube 14 which is co-moulded together with the two bearings 12 and 13 and the spacer 16 which is also made of plastic material.

In particular, the spacer 16 which is made of plastic material is produced in independent fashion inside a first mould, and, subsequently, is positioned together with the two bearings 12 and 13 inside a second mould, into which is injected a plastic material which has different mechanical characteristics from the plastic material which is used to produce the spacer 16 itself.

The support for a rolling contact bearing holder which is described in European patent No. 0 219 115, while it resolves the technical problems which are presented by the support for a rolling contact bearing holder which is described in European patent No. 0 043 429, does not result in very simple or cost effective construction and production, and also leads to further disadvantages, such as, for example, the need to block both the bearings during the assembly of the support for a rolling contact bearing holder inside the washing machine even though, in addition, the European patent No. 0 219 115 also describes a third mould for the production of the drum and the sleeve 15 by means of co-moulding with the support for a rolling contact bearing holder.

The German Patent No. DE 100 40 319 discloses a drum of a washing machine which is co-moulded with a relevant rolling contact bearing and a support for a further rolling contact bearing which is coupled with the drum by means of a .centering conical surface: this arrangement does not provide any technical solutions to the above mentioned problems and, moreover, it suffers of a further technical problem: the axial distance between the two bearings could vary during the use of the washing machine. The same technical problem is showed by the rotational bearing arrangement disclosed in the US Patent Nr. 4,969,754.

The aim of the present invention is to produce a support for a rolling contact bearing holder, which will be both simple and cost effective to produce and which will require the minimum possible number of working and assembly operations.

According to the present invention, a front loading washing machine comprising a support for a rolling contact bearing holder is provided as defined in the appended claim 1.

The present invention will now be described with reference to the attached drawings, which illustrate a non-limiting form of embodiment of the present invention, and in which:
- FIGURE 1 is an elevated lateral view of a preferred form of embodiment of the support for a rolling contact bearing holder for a washing machine which is the subject of the present invention; and
- FIGURE 2 illustrates a section along the line II-II which is shown in FIGURE 1.

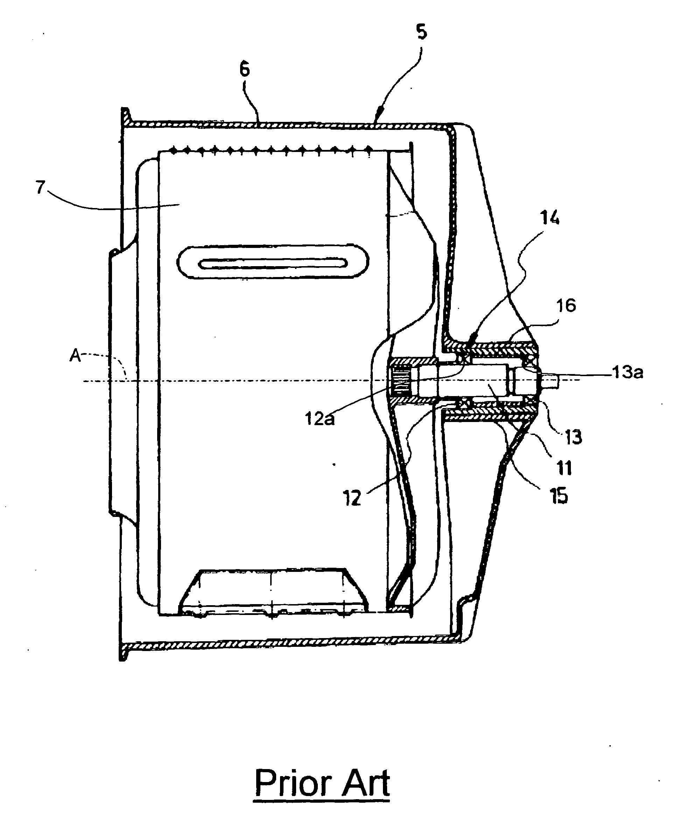

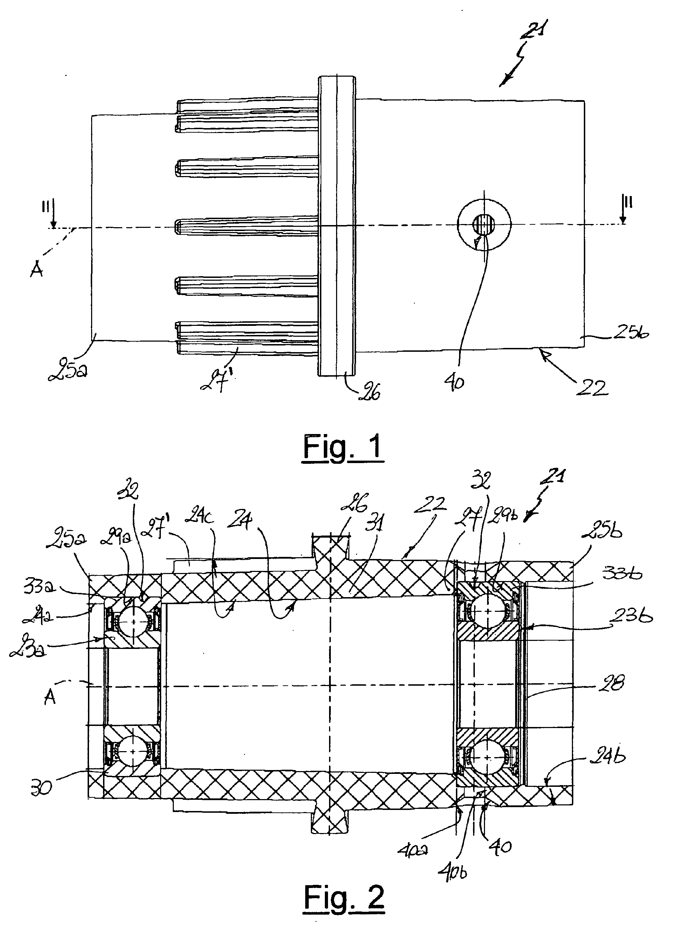

With reference to FIGURES 1 and 2, and using the same reference numbers to indicate the same or similar parts which have already been described in the introductory preamble, the number 21 refers to a support for a rolling contact bearing holder for a front loading washing machine 5 in its entirety, comprising a washtub 6, a drum 7, and a drive shaft

The washtub 6 is made of plastic material and presents, on the side opposite to the loading side, a tubular sleeve 15 which extends along the axis A, the interior of which is suitable for housing the support for a rolling contact bearing holder 21 in such a way that it may be engaged in passing fashion by the drive shaft 11, and in order to permit the rotation of the drum 7 which is mounted in overhanging fashion on the drive shaft 11 itself.

The support 21 comprises a tube 22 which is produced by moulding plastic material, and two rolling contact bearings 23a and 23b, which are housed, as will be better described below, inside the tube 22 itself, and which comprise respective outer races 33a and 33b which are co-axial to the axis A.

The tube 22 comprises an inner passing compartment 24 along the axis A, two annular edges 25a and 25b which are arranged at opposite ends of the compartment 24, and an outer annular projection 26, which is produced during the moulding of the tube 22 itself transverse to the axis A and in a substantially intermediate position between the two edges 25a and 25b, and which presents, in a passing section for the A, a shape which is substantially in the form of a tapering trapezoid and which tapers radially towards the axis A.

In addition, the tube 22 comprises a number or outer ribs 27, which are produced during the moulding of the tube 22 itself parallel to the axis A, the are distributed in uniform fashion around the axis A itself, and they extend from the projection 26 towards the edge 25a.

The inner compartment 24 of the tube 22 is obtained during the moulding of the tube 22, and is defined by three sections 24a, 24b, and 24c which are arranged in aligned fashion along the axis A, and of which the sections 24a and 24b are of a substantially cylindrical shape and are externally delimited by the edges 25a and, respectively , 25b, while the section 24c is of a substantially truncated cone shape, and tapers starting from the portion 24b towards the portion 24a.

In addition, the section 24b is internally delimited in correspondence to the passage towards the section 24c by an annular shoulder 27, and presents an annular blocking wedge 28, which defines, with the shoulder 27, an annular housing 29b for the bearing 23b, and axially tapers towards the inside of the housing 29b in order to permit both the forced mounting of the bearing 23b inside the housing 29b itself, and the axial blocking of the bearing 23b inside the housing 29b.

The section 24a presents, in turn, a respective annular housing 29a, which is produced in correspondence to the passage towards the section 24c, by means of co-moulding of the tube 22 with the bearing 23a in such a way as to include an outer radial portion 30 of the race 33a directly inside the plastic structure of the tube 22 thus producing both an additional axial blocking of the bearing 23a itself, and defining, with the other housing 29b, and axial spacer 31.

The spacer 31 thus extends for the whole of the axial length of the section 24c of the compartment 24 externally delimiting the section 24c itself, and is interposed between the two bearings 23a and 23b in order to maintain the two bearings 23a and 23b themselves at a determined axial distance from each other. As holds good for all the other elements of the tube 22 which have so far been described, the spacer 31 is also produced during the moulding of the tube 22.

Finally, as is better illustrated in FIGURE 2, each race 33a and 33b presents an annular peripheral groove 32, which is radially open towards the outside, and in the case of the bearing 23a, as is obvious from what has just been described above, is filled with plastic material in order to ensure an additional axial blocking of the bearing 23a inside the relative housing 29a.

According to what has been described so far, the support 21 is housed inside the sleeve 15 of the washtub 6, and, according to a form of embodiment which is easily understandable from the foregoing description, the tube 22 may in turn be co-moulded together with the washtub 6 in such a way as to produce a single piece which is ready to be mounted onto the washing machine 5.

In addition, the support 21 presents two passing holes 40, which are produced in diametrically opposite positions through the tube 22, and in correspondence with the housing 29b in such a way as to permit, during the co-moulding with the washtub 6, the entry of the plastic material of the washtub 6 itself inside the housing 29b itself.

The injection of the plastic material through the holes 40 is carried out in such a way as to ensure that the material is inserted and distributed inside the groove 32 of the bearing 23b producing an additional axial blocking of the bearing 23b itself and also preventing the rotation of the outer race 33b of the bearing 23b in the housing 29b.

Each hole 40 presents an outer flared portion 40a in the shape of a truncated cone and open towards the outside of the tube 22, and an inner cylindrical portion 40b, which opens onto the housing 29b and connects the relative portion 40a to the housing 29b itself.

It is obvious from the above description that producing the support 21 by mans of initially co-moulding the bearing 23a with the tube 22 permits, from this stage, a secure axial blocking of the bearing 23a itself without the need for the intervention of any additional external elements, as the presence of the annular blocking wedge 28 permits the axial blocking of the bearing 23b thus ensuring a practical and manageable movement of the tube 22 in relation to the bearings 23a and 23b which are already mounted inside it:
The additional co-moulding phase of the tube 22 with the washtub 6 means that it is easy to obtain a single piece to be assembled on the washing machine 5, as well as to avoid any eventual displacement of the bearing 23b inside the relative housing 29b.

It is intended that the present invention should not be limited to the form of embodiment which is herein described and illustrated, which is to be considered as an example of a form of embodiment of the support for a rolling contact bearing holder for a washing machine which is the subject of the present invention, and which within the scope of the appended claims, may instead by subject to further modifications relating to the shape and disposition of its parts, as well as to details pertaining to construction and assembly.

## Claims

1. A front loading washing machine (5) comprising a support (21) for a rolling contact bearing holder, the support (21) being engaged in a drive shaft (11) of a drum (7) of the washing machine (5), and comprising a plastic tube (22) which extends along its own longitudinal axis (A) and provides two inner annular housings (29a, 29b), two rolling contact bearings (23a, 23b) which are housed in the said two annular housings, and a spacer (31) which is interposed between the two rolling contact bearings (23a, 23b) in order to maintain the two rolling contact bearings (23a, 23b) at a determined axial distance from each other; wherein the spacer (31) and a first annular housing (29a) of the said two annular housings (29a, 29b) are obtained by means of co-moulding at the same time as the plastic tube (22), and, respectively, together with a first rolling contact bearing (23a) of the said two rolling contact bearings (23a, 23b) in order to axially block the first rolling contact bearing (23a) inside the first housing (29a);
**characterised in that** the support (21) comprises an outer annular shelf (26) which is arranged transverse to the longitudinal axis (A), and which presents, in a passing section for the longitudinal axis (A), a shape which is substantially in the form of a radially tapering trapezoid towards the longitudinal axis (A).

2. A washing machine according to Claim 1, **characterised in that** a second annular housing (29b) of the said two annular housings (29a, 29b) is axially delimited towards the inside of the tube (22) by a shoulder (27), and is axially delimited towards the outside of the tube (22) by an annular axial positioning tooth (28) for the relative rolling contact bearing (23b).

3. A washing machine according to Claim 2, **characterised in that** the said shoulder (27) is an integral part of the said spacer (31).

4. A washing machine according to Claims 2 or 3, **characterised in that** the said second annular housing (29b) presents at least one injection hole (40) which is obtained through the plastic tube (22) in order to permit the injection of plastic material inside the second housing (29b) once the relative rolling contact bearing (23b) has been mounted.

5. A washing machine according to any of the preceding Claims, **characterised in that** at least one of the rolling contact bearings (23a)(23b) of the said two rolling contact bearings (23a, 23b) comprises a peripheral annular groove (32) which is radially open towards the outside; the annular groove (32) being suitable for being filled by plastic material in order to guarantee a further axial blocking of the relative rolling contact bearing (23a)(23b) inside the relative annular housing (29a, 29b).

6. A washing machine according to any of the preceding Claims, **characterised in that** the support (21) comprises a number of external ribs (27'), which are arranged parallel to the longitudinal axis (A) and which are circumferentially equidistant in relation to each other, and which extend from an outer annular shelf (26) which is obtained during the co-moulding of the plastic tube (22) in a position which is axially intermediate in relation to the plastic tube (22).

## Patentansprüche

1. Frontlader-Waschmaschine (5) mit einer Stütze (21) für einen Wälzlagerhalter, die mit einer Antriebswelle (11) einer Trommel (7) der Waschmaschine (5) in Eingriff steht und ein Kunststoffrohr (22), das sich entlang seiner eigenen Längsachse (A) erstreckt und zwei innere ringförmige Gehäuse (29a, 29b) bereitstellt, zwei Wälzlager (23a, 23b), die in den beiden ringförmigen Gehäusen untergebracht sind, und einen Abstandhalter (31) umfasst, der zwischen den beiden Wälzlagern (23a, 23b) liegt, um einen bestimmten axialen Abstand zwischen den beiden Wälzlagern (23a, 23b) aufrechtzuerhalten, wobei der Abstandhalter (31) und ein erstes ringförmiges Gehäuse (29a) der beiden ringförmigen Gehäuse (29a, 29b) mittels Co-Moulding zur gleichen Zeit wie das Kunststoffrohr (22) und jeweils zusammen mit einem ersten Wälzlager (23a) der beiden Wälzlager (23a, 23b) erhalten werden, um das erste Wälzlager (23a) im ersten Gehäuse (29a) axial zu blockieren,
**dadurch gekennzeichnet, dass** die Stütze (21) einen äußeren ringförmigen Sockel (26) umfasst, der quer zur Längsachse (A) angeordnet ist und in einem Durchgangsquerschnitt für die Längsachse (A) eine Form darstellt, die im Wesentlichen in der Form eines sich radial zur Längsachse (A) hin verjüngenden Trapezes ist.

2. Waschmaschine nach Anspruch 1, **dadurch gekennzeichnet, dass** ein zweites ringförmiges Gehäuse (29b) der beiden ringförmigen Gehäuse (29a, 29b) durch eine Schulter (27) axial zum Inneren des Rohrs (22) begrenzt ist und durch einen axialen Positionierungszahn (28) für das jeweilige Wälzlager (23b) axial zur Außenseite des Rohrs (22) begrenzt ist.

3. Waschmaschine nach Anspruch 2, **dadurch gekennzeichnet, dass** die Schulter (27) ein integraler Teil des Abstandhalters (31) ist.

4. Waschmaschine nach Anspruch 2 oder 3, **dadurch gekennzeichnet, dass** das zweite ringförmige Gehäuse (29b) mindestes ein Einspritzloch (40) aufweist, das durch das Kunststoffrohr (40) erhalten wird, um das Einspritzen von Kunststoffmaterial in das zweite Gehäuse (29b) zu gestatten, wenn das jeweilige Wälzlager (23b) montiert ist.

5. Waschmaschine nach einem der vorhergehenden Ansprüche, **dadurch gekennzeichnet, dass** mindestens eines der Wälzlager (23a, 23b) der beiden Wälzlager (23a, 23b) eine ringförmige Umfangsnut (32) umfasst, die radial nach außen offen ist, wobei sich die ringförmige Nut (32) dazu eignet, mit Kunststoffmaterial gefüllt zu sein, um eine weitere axiale Blockierung des jeweiligen Wälzlagers (23a, 23b) im jeweiligen ringförmigen Gehäuse (29a, 29b) zu gewährleisten.

6. Waschmaschine nach einem der vorhergehenden Ansprüche, **dadurch gekennzeichnet, dass** die Stütze (21) mehrere äußere Rippen (27) umfasst, die parallel zu der Längsachse (A) angeordnet sind und die zueinander umfangsmäßig gleich beabstandet sind und die sich von einem äußeren ringförmigen Sockel (26) erstrecken, der beim Co-Moulding des Kunststoffrohrs (22) in einer Position erhalten wird, die bezüglich des Kunststoffrohrs (22) axial mittig liegt.

## Revendications

1. Lave-linge (5) à chargement frontal comprenant un support (21) pour un support de palier à contact à roulement, le support (21) étant engagé dans un arbre d'entraînement (11) d'un tambour (7) du lave-linge (5), et comprenant un tube en plastique (22) qui s'étend le long de son propre axe longitudinal (A) et comprend deux logements annulaires internes (29a, 29b), deux paliers à contact à roulement (23a, 23b) qui sont logés dans lesdits deux logements annulaires et un dispositif d'espacement (31) qui est interposé entre les deux paliers à contact à roulement (23a, 23b) afin de maintenir les deux paliers à contact à roulement (23a, 23b) à une distance axiale déterminée l'un de l'autre ; le dispositif d'espacement (31) et un premier logement annulaire (29a) desdits deux logements annulaires (29a, 29b) étant réalisés au moyen d'un co-moulage en même temps que le tube en plastique (22), et respectivement conjointement avec un premier palier à contact à roulement (23a) desdits deux paliers à contact à roulement (23a, 23b) afin de bloquer axialement le premier palier à contact à roulement (23a) à l'intérieur du premier logement (29a) ;
**caractérisé en ce que** le support (21) comprend une étagère annulaire externe (26) qui est agencée transversalement à l'axe longitudinal (A) et qui présente, dans une section de passage pour l'axe longitudinal (A), une forme substantiellement trapézoïdale s'effilant radialement vers l'axe longitudinal (A).

2. Lave-linge selon la revendication 1, **caractérisé en ce qu'**un deuxième logement annulaire (29b) desdits deux logements annulaires (29a, 29b) est délimité axialement vers l'intérieur du tube (22) par un épaulement (27), et est délimité axialement vers l'extérieur du tube (22) par une dent de positionnement (28) axiale annulaire pour le palier à contact à roulement relatif (23b).

3. Lave-linge selon la revendication 2, **caractérisé en ce que** ledit épaulement (27) fait partie intégrante dudit dispositif d'espacement (31).

4. Lave-linge selon la revendication 2 ou 3, **caractérisé en ce que** ledit deuxième logement annulaire (29b) présente au moins un trou d'injection (40) qui est réalisé à travers le tube en plastique (22) afin de permettre l'injection de matière plastique à l'intérieur du deuxième logement (29b) après que le palier à contact à roulement relatif (23b) a été monté.

5. Lave-linge selon l'une quelconque des revendications précédentes, **caractérisé en ce qu'**au moins l'un des paliers à contact à roulement (23a) (23b) desdits deux paliers à contact à roulement (23a, 23b) comprend une gorge annulaire périphérique (32) qui est radialement ouverte vers l'extérieur ; la gorge annulaire (32) étant adaptée pour être remplie de matière plastique afin de garantir un blocage axial supplémentaire du palier à contact à roulement relatif (23a) (23b) à l'intérieur du logement annulaire relatif (29a, 29b).

6. Lave-linge selon l'une quelconque des revendications précédentes, **caractérisé en ce que** le support (21) comprend un certain nombre de nervures extérieures (27) qui sont agencées parallèlement à l'axe longitudinal (A) et qui sont équidistantes, circonférentiellement, les unes par rapport aux autres, et qui s'étendent depuis une étagère annulaire externe (26) qui est réalisée au cours du co-moulage du tube en plastique (22) dans une position qui est axialement intermédiaire par rapport au tube en plastique (22).
